# EUROPÄISCHE PATENTANMELDUNG

(11) **EP 0 855 415 A1**
(43) Veröffentlichungstag der Anmeldung: **29.07.1998**
(21) Anmeldenummer: 98100424.5
(22) Anmeldetag: 13.01.1998
(51) Int. Cl.: C08G 18/63, C08F 290/06, C08F 2/42

(54) **Niedrigviskose Polymerpolyole, ein Verfahren zu ihrer Herstellung sowie ihre Verwendung zur Herstellung von Polyurethanschaumstoffen**

(30) Priorität: 23.01.1997 DE 19702208
(71) Anmelder: BAYER AG, 51368 Leverkusen (DE)
(72) Erfinder: Sanders, Josef, Dr., 51373 Leverkusen (DE); Dietrich, Manfred, Dr., 51373 Leverkusen (DE); Grönen, Jürgen, Dr., 51491 Overath (DE); Jacobs, Gundolf, Dr., 51503 Rösrath (DE)

(57) **Zusammenfassung**

Beschrieben wird ein Verfahren zur Herstellung stabiler, agglomeratfreier, niedrigviskoser Pfropfcopolymer-Dispersionen durch radikalische Polymerisation ethylenisch ungesättigter Monomerer in einem Basispolyol, dadurch gekennzeichnet, daß die Polymerisation in Gegenwart eines Polyols mit ethylenisch ungesättigten Endgruppen, eines Aminocrotonsäureesters der nachstehenden allgemeinen Formel 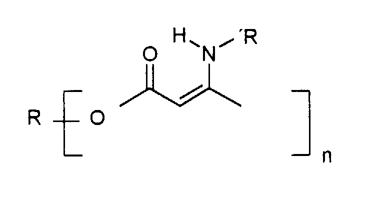 in welcher
R einen ein- oder zweiwertigen aliphatischen Kohlenwasserstoffrest mit 1-6 C-Atomen bedeutet, der ggf. durch 0-Atome unterbrochen sein kann,
R 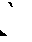 einen einwertigen aliphatischen oder araliphatischen Kohlenwasserstoffrest mit 1 - 12 Kohlenstoffatomen bedeutet, der ggf. durch O-Atome unterbrochen sein kann und der ggf. noch Hydroxyl- oder tertiäre Aminogruppen aufweisen kann, und
n eins oder zwei bedeutet, und ggf. in Gegenwart eines organischen Lösungsmittels durchgeführt wird.

Weiterhin beschrieben wird die Verwendung dieser Polymerpolyole bei der Herstellung von Polyurethanschaumstoffen.

## Beschreibung

Unter Polymerpolyolen sind im Rahmen der Erfindung Produkte zu verstehen, die durch Polymerisation ethylenisch ungesättigter Verbindungen in Polyetherpolyolen ("Basispolyolen") erhalten werden können. Diese können z.B. zur Herstellung von Polyurethan-Weichschaumstoffen verwendet werden. Hauptsächlich eingesetzte ethylenisch ungesättigte Verbindungen sind die Monomeren Styrol und Acrylnitril, die z.B. in Polyetherpolyolen als Basispolyol radikalisch polymerisiert werden.

Die Herstellung solcher Polymerpolyole ist beispielsweise in den US-Patentschriften 3 383 351 und 3 304 273 oder in der DE-A 1 152 536 und DE-A 1 152 537 beschrieben.

Die Polymerpolyole sind im Idealfall verhältnismäßig niedrigviskose, feinteilige, nichtsedimentierende Dispersionen des Polymerisats (vorzugsweise eines Acrylnitril/Styrol-Pfropf-Copolymeren) in dem im wesentlichen unveränderten Polyetherpolyol. Kennzeichnende Merkmale für Qualität und Verarbeitbarkeit der Polymerpolyole sind Viskosität, Lagerstabilität (Sedimentationsbeständigkeit) und Feinteiligkeit. Diese Eigenschaften werden vor allem durch Art und Mengenverhältnisse der Ausgangsstoffe beeinflußt. Insbesondere der Feststoffgehalt (Monomeranteil im Ansatz) und das Monomerverhältnis (z.B. Styrol/Acrylnitrilverhältnis) haben großen Einfluß auf die Produktqualität.

Die wichtigsten Ziele bei der Herstellung von Polymerpolyolen sind das Erreichen hoher Feststoffgehalte (mindestens 40 %) bei möglichst hohem Styrolanteil und möglichst niedriger Viskosität bei gleichzeitig ausgezeichneter Produktstabilität.

Um die Produktstabilität, d.h. die Unterbindung der Bildung unerwünschter, aus der kontinuierlichen Phase, dem Basispolyol, ausfallender, agglomerierter Polymerpartikel zu erreichen, müssen die Polymerteilchen während der Polymerpolyolherstellung stabilisiert werden. Eine gewisse Stabilisierung wird einmal durch radikalische Pfropfung von Styrol und Acrylnitril auf das Basispolyol erreicht, wobei ein Teil der Polyethermoleküle in das in situ gebildete Polymer eingebaut wird. Die Effektivität dieser Stabilisierung wird durch ein möglichst hohes Molgewicht des Basispolyols und einen möglichst hohen Acrylnitrilanteil im Monomerengemisch begünstigst. Nachteilig dabei ist, daß Basispolyole mit höherem Molgewicht die Viskosität der Polymerpolyole erhöhen, während ein hoher Acrylnitrilanteil die Eigenfarbe der Polymerpolyole und ihre Verfärbungstendenz bei der Verarbeitung erhöht. Beides ist unerwünscht.

Eine weitere Möglichkeit zur Stabilisierung von Polymerpolyolen ist die Mitverwendung von mit der Polyolphase kompatiblen Verbindungen, die ethylenisch ungesättigte, polymerisationsfähige Gruppen enthalten. Diese sogenannten Makromeren copolymerisieren mit den Vinylmonomeren, so daß die entstehenden Polymerteilchen durch Polyetherseitenketten sterisch stabilisiert werden und damit gegen Agglomeration und Sedimentation geschützt sind.

Die Herstellung von Polymerpolyolen unter Mitverwendung von Makromeren ist beschrieben z.B. in US-PS 3 652 639, US-PS 3 823 201, US-PS 4 460 715, US-PS 4 390 645, US-PS 5 093 412, US-PS 4 342 840. Die ethylenisch ungesättigten Doppelbindungen werden in Polyetherpolyole beispielsweise eingeführt durch Umsetzung mit cyclischen, ungesättigten Carbonsäureanhydriden wie Maleinsäureanhydrid und nachfolgende Umsetzung mit Ethylen- oder Propylenoxid; durch Veresterung mit Acryl- bzw. Methacrylsäure(derivaten); durch Umsetzung mit Alkylglycidether; durch Umsetzung mit einem ungesättigten Isocyanat wie zum Beispiel Isocyanatoalkyl-acrylat und -methacrylat, 1-(1-Isocyanato-1-methylethyl)-3-(1-methylethenyl)-benzol oder NCO-funktionellen Addukten aus einem Polyisocyanat und Hydroxyethyl- bzw. Hydroxypropylacrylat.

Auch die Kombination von Makromeren mit Kettenüberträgern wie Mercaptanen oder Alkoholen ist bereits in der DE-A 2 500 274, der EP-A 0 190 769 sowie in der EP-A 0 091 036 beschrieben worden. Mit Mercaptanen hergestellte Produkte haben den Nachteil, daß sie einen mehr oder weniger unangenehmen Geruch aufweisen. Oft zeigen solche Produkte auch nicht die erwünschte Viskosität.

Auch die Mitverwendung von Enolethern als Kettenüberträger, allerdings ohne Makromerzusatz, wird in der DE 2 837 026 bzw. der EP-A 008 444 beschrieben. Dieses Verfahren ist jedoch, wie auch die Vergleichsbeispiele zeigen, auf die Verwendung von Basispolyolen mit Molgewichten von > 4.500 mPas angewiesen, was, wie schon oben erwähnt, zu höheren Viskositäten der resultierenden Polymerpolyole führt.

Auch wenn die erwähnten Verfahren zu Polymerpolyolen führen, die grundsätzlich als Polyolkomponente für die Herstellung von Polyurethanweichschäumen verwendet werden können, so sind doch weitere Verbesserungen erwünscht: So sind die der Literatur zu entnehmenden Viskositäten höhergefüllter Polymerpolyole insbesondere bei höheren Styrolanteilen im Monomergemisch immer noch recht hoch, und es werden oft kleinere agglomerierte Polymerteilchen im Ablauf beobachtet, d.h. die Feinteiligkeit der Produkte ist nicht ausreichend.

Aufgabe der vorliegenden Erfindung war es daher, feinteilige Polymerpolyole von niedriger Viskosität und hoher Sedimentationsbeständigkeit zur Verfügung zu stellen.

Es wurde nun überraschend gefunden, daß man agglomeratfreie Polymerpolyole mit hohen Füllstoffgehalten und niedrigen Viskositäten erhält, wenn man die Polymerpolyole in Gegenwart eines Makromeren der oben beschriebenen Art und eines Kettenreglers mit Aminocrotonsäureesterstruktur der allgemeinen Formel 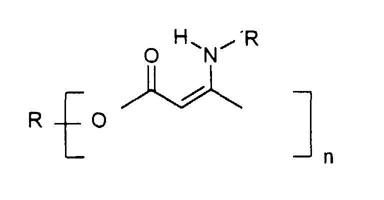 hergestellt,
in welcher
- R: einen ein- oder zweiwertigen aliphatischen Kohlenwasserstoffrest mit 1 bis 6 C-Atomen bedeutet, der ggf. durch 0-Atome unterbrochen sein kann
- 'R: einen einwertigen aliphatischen oder araliphatischen Kohlenwasserstoffrest mit 1 bis 12 Kohlenstoffatomen bedeutet, der ggf. durch 0-Atome unterbrochen sein kann, und der ggf. noch Hydroxyl- oder tertiäre Aminogruppen aufweisen kann, und
- n: eins oder zwei bedeutet.

Durch die Mitverwendung einer Kombination von Makromeren mit den speziellen Kettenüberträgern mit Aminocrotonsäureester-Struktur der beschriebenen Art werden, wie in den Herstellungsbeispielen gezeigt wird, überraschend stabile, feinteilige Polymerpolyole zugänglich, die bei gegebenem Füllstoffgehalt und Styrolanteil nochmals niedrigere Viskositäten haben oder bei gegebener Viskosität höhere Styrolanteile bzw. Feststoffgehalte aufweisen als entsprechende, unter Mitverwendung anderer üblicher Kettenüberträger/Makromer-Kombinationen hergestellte Produkte.

Insbesondere im Vergleich zu mit Mercaptanen hergestellten Produkten zeichnen sich die erfindungsgemäß hergestellten Polymerpolyole durch ihren deutlich geringeren Geruch aus.

Gegenstand der Erfindung ist ein Verfahren zur Herstellung stabiler agglomeratfreier, niedrigviskoser Pfropfcopolymerdispersionen durch radikalische Polymerisation ethylenisch ungesättigter Makromerer in einem Basispolyol, dadurch gekennzeichnet, daß die Polymerisation in Gegenwart eines Polyols mit ehtylenisch ungesättigten Endgruppen (Makromer), eines Aminocrotonsäureesters der allgemeinen Formel 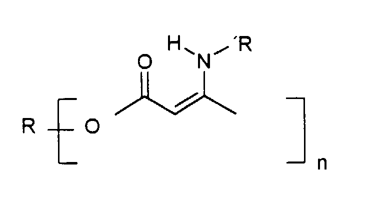 in welcher
R, 'R und n die obengenannte Bedeutung haben, und ggf. in Gegenwart eines organischen Lösungsmittels durchgeführt wird.

Üblicherweise wird das erfindungsgemäße Verfahren so durchgeführt, daß ethylenisch ungesättigte Monomere wie z.B. Styrol und Acrylnitril durch radikalische Polymerisation in einem zwei bis sechs Hydroxylgruppen aufweisenden Polyalkylenoxid mit einem Molgewicht < 4.500 als Basispolyol in Gegenwart eines Polyols mit ethylenisch ungesättigten Endgruppen (Makromer) und eines Aminocrotonsäureesters der oben angegebenen Formel umgesetzt wird.

Erfindungsgemäß ist bevorzugt, daß
- die ethylenisch ungesättigten Monomeren in einer Menge von 25-65 Gew.-%, bezogen auf die Gesamtmenge an Monomeren und Polyol, verwendet werden,
- als ethylenisch ungesättigte Monomere Mischungen aus Styrol und Acrylnitril verwendet werden,
- als ethylenisch ungesättigte Monomere Mischungen aus Styrol und Acrylnitril im Gew.-Verhältnis von 20:80 bis 100:0, besonders bevorzugt 50:50 bis 80:20, verwendet werden,
- als Basispolyol ein mindestens zwei bis sechs Hydroxylgruppen aufweisendes Polyalkylenoxid mit einer OH-Zahl von 20 bis 100, besonders bevorzugt 30 bis 70, eingesetzt wird,
- das Basispolyol ein Molekulargewicht von 1.800 bis 4.500, besonders bevorzugt 2.000 bis 4.000 g/mol, aufweist,
- das Polyol mit ethylenisch ungesättigten Endgruppen (Makromer) ein Molekulargewicht von 3.000 bis 15.000, besonders bevorzugt 4.500 bis 12.000 g/mol, und eine Funktionalität von 2-6 aufweist,
- das Polyol mit ethylenisch ungesättigten Endgruppen (Makromer) im statistischen Mittel 0,1-1,5, besonders bevorzugt 0,3-1, Mol Doppelbindungen pro Mol Polyol aufweist,
- das Polyol mit ethylenisch ungesättigten Endgruppen (Makromer) in einer Menge von 2 bis 20, besonders bevorzugt 3-10 Gew.-%, bezogen auf eingesetztes Basispolyol, eingesetzt wird,
- als Aminocrotonsäureester Umsetzungsprodukte von Ethylacetoacetat mit n-Butylamin, Cyclohexylamin oder 3-N,N-Dimethylpropylamin eingesetzt werden,
- der Aminocrotonsäureester in einer Menge von 0,1 - 5 Gew.%, bezogen auf das eingesetzte Monomergemisch, eingesetzt wird.

Die Erfindung betrifft auch stabile agglomeratfreie, niedrigviskose Pfropfcopolymer-Dispersionen, erhältlich nach dem erfindungsgemäßen Verfahren und die Verwendung der erfindungsgemäß erhältlichen Pfropfpolymer-Dispersionen als Polyolkomponente bei der Herstellung von Polyurethanschaumstoffen nach dem Isocyanat-Polyadditionsverfahren.

Die als "Basispolyole" verwendeten mindestens zwei Hydroxylgruppen aufweisenden Polyole sind vorzugsweise Polyetherpolyole, z.B. die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als "Basispolyol" verwendeten Polyetherpolyole haben vorzugsweise Funktionalitäten von 2 bis 6 und eine OH-Zahl von 20 bis 100. Die Polyetherketten sind bevorzugt aus Propylenoxid- und Ethylenoxideinheiten aufgebaut. Als "Basispolyole" kommen aber auch grundsätzlich Polyesterpolyole mit Funktionalitäten von vorzugsweise 2 bis 6 und einer OH-Zahl 20 bis 100 in Frage.

Die Polymerpolyole werden durch radikalische Polymerisation ethylenisch ungesättigter Monomerer oder Mischungen ethylenisch ungesättigter Monomere in den beschriebenen Polyetherpolyolen erhalten. Beispiele für derartige Monomere sind Butandien, Styrol, α-Methylstyrol, Methylstyrol, Ethylstyrol, Acrylnitril, Methacrylnitril, Methylmethacrylat, Acrylsäureester. Bevorzugt werden Styrol und Acrylnitril verwendet. Die Menge an ethylenisch ungesättigten Monomeren beträgt 25 bis 65 Gew.%, bezogen auf die Gesamtmenge an fertigem Produkt. Bei der Verwendung von Styrol und Acrylnitril ist das Verhältnis dieser beiden Monomeren vorzugsweise 20:80 bis 100:0, insbesondere 50:50 bis 80:20 Gewichtsteile.

Die Initiierung der radikalischen Polymerisation erfolgt mit üblichen radikalbildenden Initiatoren. Beispiele für derartige Initiatoren sind organische Peroxide wie Benzoylperoxid, tert.-Butyloctoat, Dodecanoylperoxid; Azoverbindungen wie Azoisobutyronitril oder 2,2 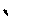 -Azobis(2-methylbutyronitril).

Die als Ausgangsmaterial für das Polyol mit ethylenisch ungesättigten Gruppen verwendeten Polyole sind ebenfalls vorzugsweise Polyetherpolyole wie die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als Ausgangsmaterial für das Polyol mit ethylenisch ungesättigten Gruppen dienenden Polyetherpolyole haben Funktionalitäten von 2 bis 6 und eine Molmasse von 3000 bis 15000 g/mol. Die Polyetherketten sind bevorzugt aus Propylenoxid- und Ethylenoxideinheiten aufgebaut.

Die ethylenisch ungesättigten Gruppen können nach den literaturbekannten Verfahren eingeführt werden. Bevorzugt ist die Umsetzung der Polyole mit Maleinsäureanhydrid und anschließende Alkoxylierung mit Ethylen- oder Propylen-oxid, die Umsetzung mit Acrylsäure bzw. deren Methyl- oder Ethylester und die Umsetzung mit einem ungesättigten Isocyanat wie z.B. 1-(1-Isocyanato-1-methylethyl)-3-(1-methylethenyl)-benzol oder einem NCO-funktionellen Addukt aus einem Polyisocyanat und Hydroxyethyl- bzw. Hydroxypropyl-acrylat. Zur Herstellung des letzteren Typs können als Polyisocyanate beispielsweise eingesetzt werden Hexamethylendiisocyanat, Isophorondiisocyanat, Diphenylmethandiisocyanat und besonders bevorzugt Toluylendiisocyanat.

Die Polyole mit ethylenisch ungesättigten Endgruppen enthalten im statistischen Mittel in der Regel 0,1 bis 1,5, vorzugsweise 0,3 - 1, Mol Doppelbindungen pro Mol Polyol.

Die erfindungsgemäß mitzuverwendenden Aminocrotonsäureester können nach dem in Houben-Weyl, Methoden der Organischen Chemie, Bd. X1/1 (1957) S. 172 gg beschriebenen Verfahren in einfacher Weise aus Acetessigsäureestern und primären Aminen unter Wasserabspaltung hergestellt werden. Nach Entfernen des Wassers durch Andestillieren liegen die Produkte häufig bereits in sehr reiner Form vor, so daß eine weitere Reinigung, z.B. durch Destillation, entfallen kann.

In der Regel werden die Aminocrotonsäureester in einer Menge von 0,1 bis 5 Gew.%, bezogen auf das eingesetzte Monomergemisch, eingesetzt.

Als gegebenenfalls einzusetzende Lösungsmittel können Kohlenwasserstoffe wie Toluol, Ethylbenzol, Isopropylbenzol, Xylole, Ketone wie Aceton oder Methylethylketon, Alkohole wie Methanol, Ethanol, Isopropanol oder Butanol eingesetzt werden. Bevorzugt sind Toluol und Ethylbenzol.

Die Durchführung des erfingungsgemäßen Verfahrens kann diskontinuierlich oder kontinuierlich erfolgen. Man kann z.B. eine Mischung, die die ethylenisch ungesättigten Monomeren, den Enolether, den Initiator und gegebenenfalls Lösungsmittel und einen Teil des einzusetzenden Polyols enthält, in einen Rührwerksbehälter eindosieren, der den vorerhitzten Polyether und das Makromer enthält. Es besteht aber auch die Möglichkeit, einen Teil des Makromers zusammen mit den ethylenisch ungesättigten Monomeren, dem Aminocrotonsäureester, gegebenenfalls dem Lösungsmittel und einem Teil des Polyethers zuzudosieren. Als weitere Möglichkeit kann man auch den Aminocrotonsäureester zusammen mit dem Polyether bzw. mit der Hauptmenge des Polyethers und dem Makromer im Reaktor vorlegen und die übrigen Komponenten zudosieren.

Außerdem kann eine Mischung aller Reaktionsteilnehmer kontinuierlich in einen Reaktor eindosiert und das Produkt in gleichem Maße durch einen Überlauf entnommen werden.

Die Temperatur, bei der die Polymerisation durchgeführt wird, beträgt in der Regel 80 bis 140°C, vorzugsweise 90 bis 130°C.

Nach Beendigung der Polymerisation wird das Produkt in üblicherweise durch Vakuumdestillation von leichtflüchtigen Anteilen wie Restmonomeren, Lösungsmittel usw. befreit.

Die nach dem erfindungsgemäßen Verfahren hergestellten Polymerpolyole sind hervorragend zur Herstellung von Polyurethankunststoffen nach dem Isocyanat-Polyadditionsverfahren geeignet. Sie sind frei von Polymeragglomeraten jeglicher Art, stabil und niedrigviskos. Dabei ist besondes überraschend, daß die erfindungsgemäße Kombination von Makromeren mit speziellen Aminocrotonsäureestern bei Verwendung niedrigmolekularer Basispolyole mit Molekulargewichten zwischen 1.800 und 4.500 Polymerpolyole mit vorteilhaft niedrigen Viskositäten ergibt. Da auf den Einsatz von Mercaptan-Kettenverlängerern bei erfindungsgemäßem Verfahren verzichtet werden kann, sind die erhaltenen Produkte in vorteilhafter Weise weitgehend geruchsfrei.

Die Herstellung von Polyurethankunststoffen, vorzugsweise von weichen, flexiblen Polyurethanschäumen, erfolgt durch Umsetzung von
a) organischen Polyisocyanaten mit
b) den erfindungsgemäßen Polymerpolylolen, gegebenenfalls in Gegenwart von
c) weiteren höhermolekularen und/oder niedermolekularen, gegenüber Isocyanaten reaktive Wasserstoffateome enthaltende Verbindungen,
d) Katalysatoren,
e) Wasser und/oder niedrigsiedenden Kohlenwasserstoffen als Treibmittel und
f) Hilfsmitteln und/oder Zusatzstoffen.

Als Ausgangskomponenten werden verwendet:
a) aliphatische, cycloaliphatische, araliphatische, aromatische und heterocyclische Polyisocyanate, wie sie z.B. von W. Siefken in Justus Liebigs Annalen der Chemie, 362, Seiten 75 bis 136 beschrieben werden, beispielsweise solche der allgemeinen Formel

   Q(NCO)ₙ,

   in der
   - n: 2 bis 5, vorzugsweise 2 und 3, und
   - Q: einen aliphatischen Kohlenwasserstoffrest mit 2 bis 18, vorzugsweise 6 bis 10 Kohlenstoffatomen, einen cycloaliphatischen Kohlenstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.

   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. 4,4'- und/oder 2,4'-Diphenylmethandiisocyanat ableiten;
b) die erfindungsgemäßen Polymerpolyole,
c) gegebenenfalls als Ausgangskomponenten Verbindungen mit mindestens 2 gegenüber Isocyanaten reaktionsfähigen Wasserstoffatomen mit einem Molekulargewicht von 40 bis 10 000 g/mol, vorzugsweise Polyetherpolyole, d.h. an sich bekannte Additionsprodukte von cyclischen Ethern wie Ethylenoxid, Propylenoxid, Styroloxid, Butylenoxid an Starterverbindungen, wie z.B. Polyhydroxyverbindungen, wie Alkylenglykole, Glycerin, Trimethylolpropan, Pentaerythrit, Sorbit, Amine wie Ethylendiamin oder Toluylendiamine sowie die Starterverbindungen selbst;
d) erfindungsgemäß werden gegebenenfalls die in der Polyurethanchemie an sich üblichen Katalysatoren mitverwendet;
e) gegebenenfalls werden als Treibmittel Wasser und/oder niedrigsiedende Kohlenwasserstoffe mitverwendet, z.B. niedrigsiedende Alkane wie Pentan, Cycloalkane wie Cyclopentan, ferner Alkene sowie unter Druck in die Reaktionsmischung eingebrachten Gase wie Kohlendioxid;
f) gegebenenfalls werden Hilfs- und Zusatzmittel mitverwendet wie
   f₁) oberflächenaktive Zusatzstoffe wie Emulgatoren und Schaumstabilisatoren,
   f₂) Reaktionsverzögerer, Zellregler der an sich bekannten Art wie Parafine, Fettalkohole oder Dimethylpolysiloxane sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen.

Beispiele von gegebenenfalls erfindungsgemäß mitzuverwendenden oberflächenaktiven Zusatzstoffen und Schaumstabilisatoren sowie Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der weichen Polyurethanschaumstoffe erfolgt in an sich bekannter Weise, wie z.B. im Kunststoff-Handbuch, Band VII, herausgegeben von G. Oertel, Carl Hanser Verlag, München, 1993, z.B. auf den Seiten 139 bis 263 beschrieben.

### Herstellungsbeispiele

### Ausgangsprodukte:

- Polyol A:: Polyether der Molmasse 3.000 auf Basis Glycerin, hergestellt durch Addition von PO (30 %), PO/EO
(40/10 %) und PO (20 %), OHZ 56
- Polyol B:: Polyether der Molmasse 6.000 auf Basis Trimethylolpropan, hergestellt durch Addition von PO (98 %) und EO (2 %), OHZ 28
- Polyol C:: Polyether der Molmasse 3.660 auf Basis Glycerin, hergestellt durch Addition von PO (30 %), PO/EO (40/10 %) und PO (20 %),
OHZ 46
- Polyol D:: Polyether der Molmasse 5.430 auf Basis Trimethylolpropan, hergestellt durch Addition von PO (17 %), PO/EO (51/17 %) und PO (15 %), OHZ 31
- Polymerpolyol A:: VP.PU 81WB40, Fa. Bayer AG, Feststoffgehalt ca. 40 %, Styrolanteil ca. 60 %
- Makromer:: Umsetzungsprodukt von einem Mol Polyol B mit 1,2 Mol Acrylsäure, hergestellt durch azeoptrope Veresterung in Gegenwart von 0,1 Gew.% p-Toluolsulfonsäure (bez. auf Polyol B) und Toluol als Lösungsmittel. Nach Entfernung des Lösungsmittels hat das Produkt einen Doppelbindungsgehalt von 139 mequ/kg.
- Aminocrotonsäureester A:: Umsetzungsprodukt von einem Mol Acetessigsäureethylester mit einem Mol i-Propylamin, Kp. 45 - 48°C/0,2 mbar
- Aminocrotonsäureester B:: Umsetzungsprodukt von einem Mol Acetessigsäureethylester mit einem Mol n-Butylamin, Kp. 69 - 71°C/0,2 mbar
- Aminocrotonsäureester C:: Umsetzungsprodukt von einem Mol Acetessigsäureethylester mit einem Mol Cyclohexylamin, Kp. 91 bis 93°C/0,2 mbar
- Aminocrotonsäureester D:: Umsetzungsprodukt von einem Mol Acetessigsäureethylester mit einem Mol Benzylamin, Kp. 119 bis 120°C/0,2 mbar
- Aminocrotonsäureester E:: Umsetzungsprodukt von einem Mol Acetessigsäureethylester mit einem Mol Anilin, Kp. 98 - 100°C/0,2 mbar
- Aminocrotonsäureester F:: Umsetzungsprodukt von einem Mol Acetessigsaureethylester mit einem Mol 3-N,N-Dimethylamino-propylamin, Kp. 84 - 87°C/0,2 mbar
- Aminocrotonsäureester G:: Umsetzungsprodukt von einem Mol Acetessigsäureethylester mit einem Mol 2-Aminoethanol, undestilliert, Reinheit 97%ig (GC)

### Allgemeine Vorschrift zur Herstellung der Polymerpolyole

Zu einer Mischung von 307,5 g Polyol A und 31,9 g Makromer wird unter Rühren bei 118°C eine Mischung bestehend aus 267,8 g Polyol A, 271,1 g Styrol, 147,1 Acrylnitril, 8,4 g Aminocrotonsäureester (oder anderer Kettenüberträger), 5,5 g 2,2'-Azobis(2-methylbutyronitril) und 158,8 g Toluol gleichmäßig über 2 Stunden zudosiert Anschließend wird 30 Minuten bei 118°C nachgerührt. Nach zügiger Zugabe einer Lösung von 0,92 g 2,2'-Azobis(2-methyl-butyronitril) in 25,4 g Toluol rührt man noch eine weitere Stunde bei 118°C nach und destilliert dann Toluol und andere flüchtige Bestandteile bei 118°C erst eine Stunde im Wasserstrahlvakuum (15 mbar), dann 2 Stunden im Ölpumpenvakuum (< 2 mbar) ab. Nach Abkühlen auf ca. 100°C wird das Produkt über ein Sieb mit einer Maschenweite von 100 µm abgelassen.

### Durchführung des Ablauftests:

Ca. 3 ml Polymerpolyol werden in ein 10 ml Rollrandgläschen gegeben, dessen Innenwände durch Umschütteln anschließend vollständig mit Polymerpolyol benetzt werden. Nach 24stündigem Stehen bei Raumtemperatur wird der an den Glaswänden verbliebene Rückstand nach Anzahl der Teilchen von etwa 5 - 30 µm Durchmesser beurteilt:
- gut:: bis ca. 10 Teilchen pro cm²
- mittel:: von ca. 10 bis 30 Teilchen pro cm²
- schlecht:: ab ca. 30 Teilchen pro cm²

### Beispiele:

Entsprechend der allgemeinen Herstellungsvorschrift wurden Polymerpolyole mit dem Polyol A als Basispolyol hergestellt, wobei unterschiedliche Kettenüberträger eingesetzt wurden. Zum Vergleich wurde die Reaktion auch ohne Kettenüberträger duchgeführt.

| Beispiel | Kettenüberträger | Viskosität mPas/25°C | | Ablauf |
|---|---|---|---|---|
| 1 | - | [1] | 4.700 | schlecht |
| 2 | Isopropanol | [1] | 4.120 | schlecht |
| 3 | 2-Butanol | [1] | 4.480 | schlecht |
| 4 | Methylethylketon | | 4.410 | schlecht |
| 5 | Dodecylmercaptan | [2] | - | - |
| 6 | Aminocrotonsäureester A | | 3.320 | mittel |
| 7 | Aminocrotonsäureester B | | 3.380 | mittel |
| 8 | Aminocrotonsäureester C | | 3.600 | gut |
| 9 | Aminocrotonsäureester D | | 3.810 | gut |
| 10 | Aminocrotonsäureester E | | 3.540 | gut |
| 11 | Aminocrotonsäureester F | | 3.480 | mittel |
| 12 | Aminocrotonsäureester G | | 3.490 | mittel |
| [1]: unfiltrierbares Produkt [2]: Reaktion mußte abgebrochen werden, da der Ansatz wegen zu hoher Viskosität nicht mehr rührbar war. | | | | |

### Verwendung der erfindungsgemäßen Polymerpolyole gemäß den Beispielen zur Herstellung von Weichschaumstoffen:

Für einen Laborschaum werden alle Komponenten - außer dem Katalysator 3 und dem Polyisocyanat - intensiv miteinander vermischt. Danach wird Katalysator 3 zugegeben, kurz vermischt und dann das Polyisocyanat unter Rühren hinzugegeben. Anschließend wird die Reaktionsmischung in eine offene Form gegossen, worin sie zum Weichschaum aufschäumt.

Die Ergebnisse der Schäumversuche sind in den nachfolgenden Tabellen zusammengefaßt (Mengen jeweils in Gew.-Teilen):
- Katalysator 1: : Desmorapid® DMEA, Fa. Rhein Chemie, Rheinau
- Katalysator 2: : RC-PUR Aktivator 108, Fa. Rhein Chemie, Rheinau
- Katalysator 3: : Desmorapid® SO, Fa. Rhein Chemie, Rheinau
- Stabilisator: : Stabilisator OS 22, Fa. Bayer AG
- Isocyanat: : Toluylendiisocyanat (Desmodur® T 80) Fa. Bayer AG

### Ergebnisse der Schäumversuche

| | Bsp. | Bsp. | Bsp. | Bsp. | Bsp. | Bsp. |
|---|---|---|---|---|---|---|
| Polyol A | 50 | 50 | 63 | 63 | 50 | 63 |
| Polymerpolyol A | 50 | | 37 | | | |
| Beispiel 8 | | 50 | | 37 | | |
| Beispiel 11 | | | | | 50 | 37 |
| Wasser | 2,5 | 2,5 | 4,5 | 4,5 | 2,5 | 4,5 |
| Stabilisator | 0,7 | 0,7 | 1,0 | 1,0 | 0,7 | 1,0 |
| Katalysator 1 | 0,1 | 0,1 | 0,1 | 0,1 | 0,1 | 0,1 |
| Katalysator 2 | 0,05 | 0,05 | 0,05 | 0,05 | 0,05 | 0,05 |
| Katalysator 3 | 0,15 | 0,15 | 0,15 | 0,15 | 0,15 | 0,15 |
| Desmodur T 80 | 32,8 | 33,3 | 54,4 | 55,0 | 33,3 | 55,0 |
| Verschäumbarkeit | sehr gut | sehr gut | sehr gut | sehr gut | sehr gut | sehr gut |
| Offenzelligkeit | 120 | 120 | 95 | 80 | 115 | 75 |
| Rohdichte, n. DIN 53420 [kgm⁻³] | 39 | 39 | 27 | 27 | 39 | 26 |
| Zugfestigkeit, n. DIN 53571 [kPa] | 150 | 155 | 128 | 120 | 149 | 130 |
| Bruchdehnung, n. DIN 53 571 [%] | 136 | 147 | 136 | 128 | 143 | 147 |
| Stauchhärte 40 % n. DIN 53 577 [kPa] | 7,3 | 7,4 | 6,6 | 6,5 | 7,4 | 6.4 |
| Griff/Elastizität | sehr gut | sehr gut | sehr gut | sehr gut | sehr gut | sehr gut |

Die Verschäumungsbeispiele zeigen, daß die erfindungsgemäßen feinteiligen, niedrigviskosen Polymer-Dispersionen Schäume mit vergleichbaren Eigenschaften ergeben, wie aktuelle Handelsprodukte mit höherer Viskosität. Schaumrezepturen mit den erfindungsgemäßen Produkten können aufgrund ihrer niedrigeren Viskosität bei gleichem Füllstoffgehalt leichter verarbeitet werden. Außerdem können mit ihnen unter Berücksichtigung einer gleichen maximalen Verarbeitungsviskosität höhere Feststoffgehalte eingestellt werden, die Schäume mit entsprechend höheren Härten liefern.

### Vergleichsbeispiele 1 bis 6:

Zu Vergleichszwecken wurden Polymerpolyole ohne Makromerzusatz jeweils ohne sowie mit Aminocrotonsäureester hergestellt.

Zu 250,2 g Polyol wurde unter Rühren in Stickstoffatmosphäre bei 125°C eine Mischung, bestehend aus 375,3 g Polyol, 250 g Styrol, 166,8 g Acrylnitril, 8,34 g Aminocrotonsäureester C, 5,2 g 2,2'-Azobis(2-methyl-butyronitril) und 144 g Toluol gleichmäßig über 2 Stunden zudosiert. Anschließend wurde 30 Minuten bei 125°C nachgerührt. Nach zügiger Zugabe einer Lösung von 0,9 g 2,2'-Azobis(2-methylbutyronitril) in 25,4 g Toluol rührte man noch eine weitere Stunde bei 125°C nach und destillierte dann Toluol und andere flüchtige Bestandteile bei 125°C erst eine Stunde im Wasserstrahlvakuum (15 mbar), dann über 2 Stunden im Ölpumpenvakuum (< 2 mbar) ab. Nach Abkühlen auf ca. 100°C wurde das Produkt über ein Sieb mit einer Maschenweite von 100 µm abgelassen.

Die Ergebnisse der Vergleichsversuche sind in nachfolgender Tabelle zusammengefaßt:

| Vergleichsbeispiel | Polyol | Aminocrotonsäureester | Viskosität (mPas/25°C) | | Ablauf |
|---|---|---|---|---|---|
| 1 | Polyol A | - | klumpig | [1] | - |
| 2 | Polyol A | C | klumpig | [1] | - |
| 3 | Polyol C | - | klumpig | | |
| 4 | Polyol C | C | hochviskos | [2] | - |
| 5 | Polyol D | - | 21.780 | | schlecht |
| 6 | Polyol D | C | 7.180 | | schlecht |
| [1] Dispersion nicht stabil, Reaktion mußte abgebrochen werden [2] Reaktionsmischung wurde so viskos, daß die Reaktion abgebrochen werden mußte | | | | | |

Die Vergleichsbeispiele zeigen, daß ohne den Zusatz von Makromeren nur unerwünscht hochviskose oder klumpige Polymerpolyole erhalten werden.

## Patentansprüche

1. Verfahren zur Herstellung stabiler, agglomeratfreier, niedrigviskoser Pfropfcopolymer-Dispersionen durch radikalische Polymerisation ethylenisch ungesättigter Monomerer in einem Basispolyol, dadurch gekennzeichnet, daß die Polymerisation in Gegenwart eines Polyols mit ethylenisch ungesättigten Endgruppen, eines Aminocrotonsäureesters der nachstehenden allgemeinen Formel 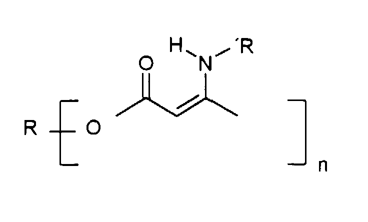 in welcher
R einen ein- oder zweiwertigen aliphatischen Kohlenwasserstoffrest mit 1-6 C-Atomen bedeutet, der ggf. durch 0-Atome unterbrochen sein kann,
R 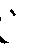 einen einwertigen aliphatischen oder araliphatischen Kohlenwasserstoffrest mit 1 - 12 Kohlenstoffatomen bedeutet, der ggf. durch O-Atome unterbrochen sein kann und der ggf. noch Hydroxyl- oder tertiäre Aminogruppen aufweisen kann, und
n eins oder zwei bedeutet,
und ggf. in Gegenwart eines organischen Lösungsmittels durchgeführt wird.

2. Verfahren nach Anspruch 1, dadurch gekennzeichnet, daß die Menge an ethylenisch ungesättigen Monomeren 25 - 65 Gew.%, bezogen auf die Gesamtmenge an Monomeren und Polyol, beträgt.

3. Verfahren nach Anspruch 1 und 2, dadurch gekennzeichnet, daß als ethylenische ungesättigte Monomere Styrol und Acrylnitril im Gewichtsverhältnis von 20:80 bis 100:0 verwendet werden.

4. Verfahren nach Anspruch 1 und 2, dadurch gekennzeichnet, daß als ethylenisch ungesättigte Monomere Styrol und Acrylnitril im Gewichtsverhältnis 50:50 bis 80:20 verwendet werden.

5. Verfahren nach Anspruch 1 bis 4, dadurch gekennzeichnet, daß als Basispolyol ein zwei bis sechs Hydroxylgruppen aufweisendes Polyalkylenoxid mit einer OH-Zahl von 20 bis 100, vorzugsweise von 30 bis 70, eingesetzt wird.

6. Verfahren nach Anspruch 1 bis 5, dadurch gekennzeichnet, daß ein Basispolyol vom Molekulargewicht 1.800 bis 4.500, vorzugsweise vom Molekulargewicht 2.000 bis 4.000, eingesetzt wird.

7. Verfahren nach Anspruch 1 bis 6, dadurch gekennzeichnet, daß ein zwei- bis sechsfunktionelles Polyol mit ethylenisch ungesättigten Endgruppen vom Molekulargewicht 3.000 bis 15.000, vorzugsweise vom Molekulargewicht 4.500 bis 12.000, eingesetzt wird.

8. Verfahren nach Anspruch 1 bis 7, dadurch gekennzeichnet, daß das Polyol mit ehtylenisch ungesättigten Endgruppen in einer Menge von 2 - 20 Gew.%, vorzugsweise 3 bis 10 Gew.%, bezogen auf die Gesamtmenge an Basispolyol, eingesetzt wird.

9. Verfahren nach Anspruch 1 bis 8, dadurch gekennzeichnet, daß als Aminocrotonsäureester das Reaktionsprodukt aus Essigsäureethylester und Isopropylamin, Cyclohexylamin oder 3-(N,N-Dimethyl)propylamin in einer Menge von 0,1 bis 5 Gewichtsprozent, bezogen auf die eingesetzte Monomermenge, eingesetzt wird.

10. Stabile, agglomeratfreie, niedrigviskose Pfropfcopolymer-Dispersion, erhältlich nach dem Verfahren gemäß Anspruch 1 bis 9.

11. Verwendung der gemäß Anspruch 1 bis 9 erhältlichen Pfropfcopolymerisate als Polyolkomponente bei der Herstellung von Polyurethanschaumstoffen.
